# EUROPÄISCHE PATENTSCHRIFT

(11) **EP 3 008 358 B1**
(45) Veröffentlichungstag und Bekanntmachung des Hinweises auf die Patenterteilung: **10.06.2020**
(21) Anmeldenummer: 14723773.9
(22) Anmeldetag: 12.05.2014
(51) Int. Cl.: F16H 59/08, B60K 35/00, F16H 63/42

(54) **BETÄTIGUNGSEINRICHTUNG UND VERFAHREN ZUR AUSWAHL VON SCHALTSTUFEN EINES FAHRZEUGGETRIEBES MIT SHIFT-BY-WIRE BETÄTIGUNG**
ACTUATING DEVICE AND METHOD FOR SELECTING SHIFT STAGES OF A VEHICLE TRANSMISSION BY MEANS OF A SHIFT-BY-WIRE ACTUATION
DISPOSITIF D'ACTIONNEMENT ET PROCÉDÉ DE SÉLECTION DE RAPPORT D'UNE BOÎTE DE VITESSES DE VÉHICULE À CHANGEMENT DE VITESSES À COMMANDE ÉLECTRIQUE

(30) Priorität: 11.06.2013 DE 102013210833
(43) Veröffentlichungstag der Anmeldung: 20.04.2016
(73) Patentinhaber: ZF Friedrichshafen AG, 88046 Friedrichshafen (DE)
(72) Erfinder: FRIBUS, Vitali, 49413 Dinklage (DE)
(74) Vertreter: ZF Friedrichshafen AG
(86) Internationale Anmeldenummer: PCT/EP2014/059594
(87) Internationale Veröffentlichungsnummer: WO 2014/198468

(56) Entgegenhaltungen:
- WO-A1-2012/147942
- DE-A1-102007 042 650
- DE-A1-102009 031 649
- DE-A1-102011 112 566
- JP-A- 2006 177 401

## Beschreibung

Die vorliegende Erfindung betrifft eine Betätigungseinrichtung und ein Verfahren zur Auswahl von Schaltstufen eines Fahrzeuggetriebes mit shift-by-wire Betätigung.

Üblicherweise werden Schaltstufen eines Fahrzeuggetriebes mittels einer im Griffbereich eines Fahrers angeordneten Wählhebel- bzw. Schalthebeleinrichtung ausgewählt. Die Wählhebel- bzw. Schalthebeleinrichtung umfasst wenigstens eine Schaltgasse, in welcher der Wählhebel bzw. Schalthebel zum Auswählen einer Schaltstufe mechanisch bewegbar ist. Der Wählhebel bzw. Schalthebel ist mit einer Sensorik gekoppelt, die in der jeweiligen ausgewählten Wählhebel- bzw. Schalthebelposition ein der jeweiligen Position zugeordnete Schaltstufe entsprechendes elektrisches Signal an eine Getriebesteuerung zum Schalten des Fahrzeuggetriebes gemäß der ausgewählten Schaltstufe übermittelt. Übliche Schaltstufen sind der Rückwärtsfahrbetrieb "R", der Vorwärtsfahrbetrieb "D" für Drive, die Neutralstellung "N", die manuelle Ganghochschaltstufe "+", die manuelle Gangrunterschaltstufe "-" sowie die Parksperrenstellung "P". Dazu sind weitere Modustasten wie beispielsweise "S" für den Sportmodus bekannt. Diese Wählhebel- bzw. Schalthebeleinrichtungen bedürfen jedoch einen entsprechenden Bauraum und sind teils nicht intuitiv oder einfach zu bedienen.

DE102009031649A1 offenbart eine Eingabevorrichtung für ein Kraftfahrzeug, durch welche wenigstens eine Betriebsfunktion bzw. wenigstens ein Betriebszustand des Kraftfahrzeugs wählbar ist. Erfindungsgemäß ist vorgesehen, dass die Eingabevorrichtung derart ausgebildet ist, dass die Auswahl einer Betriebsfunktion bzw. eines Betriebszustandes nur dann möglich ist, wenn eine gleichzeitige Berührung der Eingabevorrichtung an wenigstens zwei Stellen erfolgt. Mit dieser Maßnahme ist auf sehr einfache Weise sichergestellt, dass das Risiko einer unbeabsichtigten Eingabe deutlich vermindert wird.

WO 2012/147942 A1 offenbart ein Bedienteil zur manuellen Betätigung eines Kraftfahrzeugs. Das Bedienteil weist einen Bildschirm und einen Touchscreen auf.

DE 10 2007 042 650 A1 offenbart ein platzsparendes und einfach zu handhabendes Bedienteil zur manuellen Betätigung eines Kraftfahrzeuggetriebes. Das Bedienteil weist einen Bildschirm und einen Touchscreen auf, wobei der Bildschirm zur Wiedergabe einer Schaltstellung des Kraftfahrzeuggetriebes und der Touchscreen zur Veränderung der Schaltstellung des Kraftfahrzeuggetriebes durch Berühren vorgesehen sind. Der Bildschirm und der Touchscreen sind derart aufeinander abgestimmt, dass eine Auswahl einer Schaltstufe nach Art des Drag-and-Drop-Prinzips durch Berühren eines Symbols, das neben einem Anzeigeort einer Schaltstufe angezeigt wird, und anschließendes berührendes Überstreichen des Touchscreens bzw. Ziehen des Symbols über einen mittleren Abschnitt bis zu einem Bereich neben einem Anzeigeort einer anderen Schaltstufe sowie anschließendes Loslassen des Touchscreens erfolgt.

JP 2006-177401 A offenbart ein ähnlich handzuhabendes Bedienteil, wobei das Symbol an dem Anzeigeort der Schaltstufe berührbar angezeigt wird und zur Schaltstufenauswahl bis zu einem Anzeigeort einer anderen Schaltstufe durch berührendes Überstreichen des Touchscreens bewegbar ist.

Mit der vorliegenden Erfindung soll eine alternative, eine auf dem Drag-and-Drop-Prinzip basierende insbesondere verbesserte Betätigungseinrichtung bereitgestellt werden, wobei die vorgeschlagene Betätigungseinrichtung einfach und kostengünstig ausgestaltet sowie einen sicheren und insbesondere zugleich einfachen Wechsel der Schaltstufe ermöglichen soll.

Gem. der vorliegenden Erfindung werden die genannten Aufgaben mittels einer Betätigungseinrichtung gem. Anspruch 1 und einem Verfahren gem. Anspruch 10 gelöst,

Vorteilhafte Weiterbildungen der Erfindung sind in den abhängigen Ansprüchen angegeben.

Die vorgeschlagene Betätigungseinrichtung weist einen Berührungsbildschirm bzw. einen Touchscreen auf. Ein solcher Berührungsbildschirm kann auf einem kapazitiven, resistiven, optischen oder akustischen Prinzip beruhen. Bei einem kapazitiven Berührungsbildschirm wird die Bildschirmoberfläche mit einem elektrischen Feld durch entsprechend angeordnete Elektroden belegt. Eine Berührung der Bildschirmoberfläche bewirkt eine erkennbare Veränderung des elektrischen Feldes, wodurch die genaue Position der Berührungsstelle ermittelt werden kann. Bei einem resistiven Berührungsbildschirm ist die Bildschirmoberfläche durch zwei voneinander durch Abstandshalter beabstandete elektrisch leitende Folien ausgebildet. Durch Aufbringen eines geeigneten Drucks auf der einem Benutzer zugewandten oberen Folie kommt diese in stromleitenden Kontakt mit der anderen unteren Folie, wodurch die genaue Position der Berührungsstelle ermittelbar ist. Der optische Berührungsbildschirm zeichnet sich dadurch aus, dass die Bildschirmoberfläche mit einem Gitter aus Lichtstrahlen durch entsprechend angeordnete Leuchtelemente und zugeordneten lichtempfindlichen Sensoren belegt wird. Am Ort der Berührungsstelle wird das Lichtgitter unterbrochen, wodurch die genaue Position der Berührungsstelle ermittelbar ist. Bei dem akustischen Berührungsbildschirm ist der Bildschirm aus einem Glas ausgebildet, wobei durch eine entsprechend geeignete Anordnung von Wandlern und Reflektoren ein Muster aus Ultraschallwellen in dem Glas erzeugt wird. Bei Berührung der Bildschirmoberfläche wird ein Geräusch erzeugt, dass das Ultraschallwellenmuster verändert, wodurch eine Position der Berührungsstelle ermittelbar ist. Für die vorgeschlagene Betätigungseinrichtung wird ein kapazitiver oder resistiver Berührungsbildschirm besonders bevorzugt, da diese kostengünstig, sicher und einfach bedienbar sind. Der Berührungsbildschirm weist wenigstens hinsichtlich der konstruktiven Ausgestaltung einen aus dem Stand der Technik vorbekannten Aufbau auf.

Der Berührungsbildschirm weist ferner wenigstens ein Anzeige- und Berührungsfeld zur Anzeige und Auswahl einer auswählbaren Schaltstufe auf. Mit anderen Worten ist eine Fläche des Berührungsbildschirms derart aufgeteilt, dass zumindest ein Anzeige- und Betätigungsfeld definierender Abschnitt der Berührungsbildschirmfläche verwendet wird, wenigstens oder genau eine Schaltstufe wie beispielsweise eine Rückwärtsfahrstufe R, eine Vorwärtsfahrstufe D, eine Neutralstellung N oder eine Parksperrenstellung P anzuzeigen. Die zur Anzeige verwendete Berührungsbildschirmfläche definiert die Größe des Anzeige- und Berührungsfeldes und ist mit solchen Ausmaßen gewählt, dass die Schaltstufe von einem Benutzer gut wahrnehmbar bzw. erkennbar ist. Weitere Schaltstufen können durchaus zur Anzeige und Auswahl über entsprechende weitere Anzeige- und Berührungsfelder hinzugenommen werden. Vorzugsweise kann die anzeigbare Schaltstufe über einen mit dem Berührungsbildschirm gekoppelten Drehsteller nach Art einer Scrollfunktion in dem Anzeige- und Berührungsfeld verändert werden. Der Drehsteller kann Teil der Betätigungseinrichtung oder ein von der Betätigungseinrichtung unabhängiges Bauteil sein. Der Drehsteller kann beispielsweise eine wie von üblichen eingebauten Fahrzeugnavigationssystemen bekannte Form aufweisen. Der Drehsteller kann neben der Drehfunktion zusätzliche Funktionstastenelemente wie Drucktastenelemente, deren Betätigung mit einer vorbestimmten Funktion unterlegt ist, umfassen. Beispielsweise kann der Drehsteller als Teil der Betätigungseinrichtung eine Funktions- bzw. Drucktaste zum Einlegen der Parksperre aufweisen. Das Funktionstastenelement kann dabei von der Drehfunktion des Drehstellers derart entkoppelt vorgesehen sein, dass sich bei Drehen des Drehstellers das Funktionstastenelement nicht mit dreht. Dazu kann der Drehsteller einen von einem Drehring einfassenden mittleren Bereich aufweisen, der das Funktionstastenelement umfasst, wobei der Drehring um den mittleren Bereich drehbeweglich ist.

Zusätzlich ist das Anzeige- und Berührungsfeld berührungssensitiv ausgestaltet. Mit anderen Worten weist der Berührungsbildschirm an dem Ort des Anzeige- und Berührungsfelds eine berührungsempfindliche Oberfläche auf, um eine Aktion durch Berühren des Anzeige- und Berührungsfelds durchführen zu können. Eine solche Aktion ist im Sinne der vorliegenden Erfindung die Auswahl einer angezeigten Schaltstufe durch Berühren des Anzeige- und Berührungsfelds, wobei durch Berühren des Anzeige- und Berührungsfelds ein entsprechendes Signal an eine Steuereinrichtung ausgelöst wird, das die Berührung und damit die Auswahl der Schaltstufe signalisiert. Eine solche Steuereinrichtung kann beispielsweise eine den Berührungsbildschirm steuernde und regelnde Steuereinrichtung sein.

Gemäß der vorliegenden Erfindung zeichnet sich der Berührungsbildschirm dadurch aus, dass dieser zusätzlich zu dem Anzeige- und Berührungsfeld ein berührungssensitives Bestätigungsfeld zum Bestätigen einer ausgewählten Schaltstufe und zur Anzeige der ausgewählten Schaltstufe aufweist. Das Bestätigungsfeld ist benachbart zu dem Anzeige- und Berührungsfeld angeordnet. Mit anderen Worten ist die Berührungsbildschirmfläche derart aufgeteilt, dass wenigstens ein Anzeige- und Berührungsfeld und ein Bestätigungsfeld, welche jeweils durch Berührung aktivierbar sind bzw. durch Berührung eine Aktion bzw. ein Signal auslösen, vorgesehen sind. Zwischen dem Anzeige- und Berührungsfeld und dem Bestätigungsfeld ist vorzugsweise ein Zwischenbereich vorgesehen, welcher gleichfalls berührungssensitiv bzw. berührungsempfindlich ausgestaltet ist. Alternativ können das Anzeige- und Berührungsfeld und das Bestätigungsfeld aneinander angrenzen.

Das Bestätigungsfeld ist mit dem Anzeige- und Berührungsfeld derart gekoppelt, dass durch berührendes Überstreichen des Berührungsbildschirms bzw. der Berührungsbildschirmoberfläche von dem Anzeige- und Berührungsfeld bis zu dem Bestätigungsfeld eine angezeigte auswählbare Schaltstufe zur schaltwirksamen Stellung des Fahrzeuggetriebes auswählbar und bestätigbar ist. Die Betätigungseinrichtung macht sich somit das Drag-and-Drop-Prinzip zunutze. Wie vorbeschrieben erfolgt eine Auswahl der auswählbaren Schaltstufe durch Berühren des Anzeige- und Berührungsfeldes. Eine Bestätigung der ausgewählten Schaltstufe erfolgt nach dem Ziehen der ausgewählten Schaltstufe durch berührendes Überstreichen des Berührungsbildschirms bis zu dem Bestätigungsfeld wenigstens durch Erreichen des Bestätigungsfeldes. Bereits mit Erreichen des Bestätigungsfeldes unter Berührung des Berührungsbildschirms kann also ein Signal, welches die Information trägt, welche Schaltstufe ausgewählt worden ist, von der Betätigungseinrichtung abgesetzt werden. Vorzugsweise erfolgt die Bestätigung der ausgewählten Schaltstufe erst nachdem das Bestätigungsfeld einen berührungslosen Zustand einnimmt. Mit anderen Worten wird das Signal vorzugsweise erst abgesetzt, wenn ein Benutzer nach Erreichen des Bestätigungsfelds beispielsweise seinen Finger vom Bestätigungsfeld abnimmt. Der Vorgang des berührenden Überstreichens von dem Anzeige- und Berührungsfeld bis zu dem Bestätigungsfeld kann dem Auswahlvorgang oder alternativ dem Bestätigungsvorgang zugeordnet werden. Weiterhin alternativ kann der Vorgang des berührenden Überstreichens als ein von der Auswahl und der Bestätigung unabhängiger Vorgang betrachtet werden.

Vorzugsweise ist der Berührungsbildschirm derart ausgelegt, dass die in dem Anzeige- und Berührungsfeld angezeigte und durch Berühren ausgewählte Schaltstufe während des berührenden Überstreichens bis zu dem Bestätigungsfeld anzeigbar bleibt. Die Anzeige der ausgewählten Schaltstufe kann dauernd oder blinkend erfolgen. Einem Benutzer kann somit während des gesamten Vorgangs von der Schaltstufenauswahl bis zu der Schaltstufenbestätigung angezeigt werden, welche Schaltstufe ausgewählt wurde und zur Bestätigung ansteht. Solange das schaltwirksame Signal von der Betätigungseinrichtung nicht abgesetzt worden ist, kann der Benutzer die Schaltstufenauswahl überdenken und eine Änderung der Schaltstufenauswahl vornehmen.

Weiter bevorzugt ist der Berührungsbildschirm derart ausgelegt, dass sich die ausgewählte Schaltstufe nach Bestätigen derselbigen anzeigbar zu seiner Ursprungsposition zurückbewegt. Dadurch kann einem Benutzer die Bestätigung der ausgewählten Schaltstufe visuell angezeigt werden.

Gemäß einer bevorzugten Ausführungsform der vorliegenden Erfindung weist der Berührungsbildschirm für jedes eine Schaltstufe anzeigende Anzeige- und Berührungsfeld ein zugeordnetes berührungssensitives Bestätigungsfeld auf. Zur Vereinfachung einer intuitiven Handhabung der Betätigungseinrichtung sind vorzugsweise die Anzeige- und Berührungsfelder entlang einer ersten Reihe angeordnet, wobei die zugeordneten Bestätigungsfelder entlang einer der ersten Reihe benachbarten zweiten Reihe angeordnet sind. Die Reihenanordnung kann entlang einer Geraden oder einer Kurve, vorzugsweise einer kreisbogenförmige Kurve, weiterhin parallel zu einer Fahrzeuglängsrichtung oder parallel zu einer Fahrzeugquerrichtung erfolgen. Eine Reihenanordnung entlang einer kreisbogenförmigen Kurve, die sich in Richtung einer Fahrzeugquerrichtung erstreckt und weiterhin bevorzugt einer Handform angepasst, wird besonders bevorzugt, wenn die Betätigungseinrichtung mit der Hand eines Benutzers betätigt werden soll. So könnten mehrere, jeweils eine auswählbare Schaltstufe anzeigende Anzeige- und Berührungsfelder vorgesehen werden, die vorbestimmten Fingern eines Benutzers zur Betätigung zugeordnet werden könnten. Der Benutzer könnte somit auf einfache Weise durch Aufsetzen eines entsprechenden Fingers auf dem zugeordneten Anzeige- und Berührungsfeld, durch nachfolgendes berührendes Überstreichen des Berührungsbildschirms in Richtung zum Bestätigungsfeld und durch anschließendes Erreichen des Bestätigungsfeldes oder Abnehmen des Fingers von dem Bestätigungsfeld eine Schaltstufenauswahl und - bestätigung intuitiv vornehmen.

Nach einer bevorzugten Ausführungsform der vorliegenden Erfindung sind mit dem berührungssensitiven Bestätigungsfeld unterschiedliche Schaltstufen bestätigbar und anzeigbar. Damit kann eine Anzahl der berührungssensitiven Bestätigungsfelder reduziert werden. Beispielsweise braucht in dem vorbeschriebenen bevorzugten Fall nur eines Anzeige- und Berührungsfeldes, über welches unterschiedliche anzeigbare Schaltstufen beispielsweise mittels des Drehstellers auswählbar sind, nur ein Bestätigungsfeld vorgesehen werden. In einem alternativ bevorzugten Fall, bei welchen wenigstens zwei Anzeige- und Berührungsfelder vorhanden sein können, braucht ebenfalls nur ein für beide Anzeige- und Berührungsfelder gemeinsames Bestätigungsfeld vorgesehen werden. Dies gilt gleichermaßen für eine Betätigungseinrichtung mit einem Berührungsbildschirm mit mehr als zwei Anzeige- und Berührungsfeldern.

Gemäß einer bevorzugten Ausführungsform der vorliegenden Erfindung weist der Berührungsbildschirm mehrere berührungssensitive Anzeige- und Berührungsfelder, über welche jeweils wenigstens eine Schaltstufe anzeigbar und auswählbar ist, und ein den Anzeige- und Berührungsfeldern zugeordnetes gemeinsames berührungssensitives Bestätigungsfeld auf, wobei die Anzeige- und Berührungsfelder und das gemeinsame Bestätigungsfeld entlang einer Reihe angeordnet sind und wobei eine Berührungssensitivität des Berührungsbildschirms derart regelbar ist, dass bei Berührung eines der Anzeige- und Berührungsfelder die Berührungssensitivität wenigstens eines zwischen dem Anzeige- und Berührungsfeld und dem Bestätigungsfeld liegenden anderen berührungssensitiven Anzeige- und Berührungsfeldes deaktiviert ist. Somit kann bei berührendem Überstreichen von einem Anzeige- und Berührungsfeld über ein weiteres Anzeige- und Berührungsfeld bis zu dem Bestätigungsfeld eine versehentliche Auswahl der mit dem überstrichenden weiteren Anzeige- und Berührungsfeld angezeigten Schaltstufe verhindert werden. Beispielsweise braucht eine solche Deaktivierung jedoch nicht vorgenommen zu werden, wenn zwischen dem Anzeige- und Berührungsfeld und dem Bestätigungsfeld kein anderes Anzeige- und Berührungsfeld liegt. Alternativ könnten alle anderen Anzeige- und Berührungsfelder deaktiviert werden. Die Berührungssensitivität des Berührungsbildschirms kann demnach bedarfsgerecht angepasst werden. Der Berührungsbildschirm kann über eine Steuereinrichtung gesteuert und geregelt werden, wobei die Steuereinrichtung vorzugsweise Teil des Berührungsbildschirms, der Betätigungseinrichtung oder eine andere Steuereinrichtung zur Steuerung wenigstens einer anderen Fahrzeugfunktion sein kann.

Die Reihenanordnung kann wie vorbeschrieben ausgestaltet sein. Der Berührungsbildschirm kann somit in einer Richtung quer zu der Reihenanordnung platzsparend ausgebildet werden. Das Bestätigungsfeld ist in der Reihenanordnung vorzugsweise außenseitig vorgesehen. Weiterhin bevorzugt ist jedem der Anzeige- und Berührungsfelder nur eine auswählbare Schaltstufe zur Anzeige und Auswahl zugeordnet. Dadurch kann eine intuitive und einfache Betätigung der Betätigungseinrichtung ermöglicht werden.

Nach einer weiteren alternativ bevorzugten Ausführungsform der vorliegenden Erfindung weist der Berührungsbildschirm mehrere berührungssensitive Anzeige- und Berührungsfelder, über welche jeweils wenigstens eine Schaltstufe anzeigbar und auswählbar ist, und ein den Anzeige- und Berührungsfeldern zugeordnetes gemeinsames berührungssensitives Bestätigungsfeld auf, wobei die Anzeige- und Berührungsfelder entlang einer Reihe angeordnet sind, und wobei das Bestätigungsfeld zu der Reihe benachbart angeordnet ist. Die Reihenanordnung kann wie vorbeschrieben ausgestaltet sein. Der Berührungsbildschirm ist dadurch in Richtung der Reihenanordnung schmal ausbildbar.

Vorzugsweise erstreckt sich das Bestätigungsfeld parallel zu der Reihenanordnung. Weiterhin bevorzugt erstreckt sich das Bestätigungsfeld über alle in der Reihe angeordneten Anzeige- und Berührungsfelder. Besonders bevorzugt schließt das Bestätigungsfeld außenseitig mit den Außenseiten der in der Reihe außenseitig angeordneten Anzeige- und Berührungsfelder ab. Im Sinne der vorliegenden Erfindung wird unter außenseitig bzw. außen der einem Rand der Betätigungseinrichtung nahe Bereich, der innerhalb des die Betätigungseinrichtung begrenzenden Randes liegt, verstanden. Weiter bevorzugt ragt das Bestätigungsfeld außenseitig über die Außenseiten der in der Reihe außenseitig angeordneten Anzeige- und Berührungsfelder hinaus. Damit kann der Schaltstufenauswahl- und Schaltstufenbestätigungsvorgang durch eine geradlinige und kurze Bewegung von dem entsprechenden Anzeige- und Berührungsfeld bis zu dem gemeinsamen Bestätigungsfeld erfolgen, wodurch ein schnelles Schalten bzw. ein schneller Gangwechsel ermöglicht wird.

Weiterhin bevorzugt ist jedem der Anzeige- und Berührungsfelder nur eine auswählbare Schaltstufe zur Anzeige und Auswahl zugeordnet. Dadurch kann eine intuitive und einfache Betätigung der Betätigungseinrichtung ermöglicht werden.

Besonders bevorzugt ist der Berührungsbildschirm wie vorbeschrieben derart regelbar, dass bei Berührung eines der Anzeige- und Berührungsfelder die Berührungssensitivität wenigstens eines der anderen oder besonders bevorzugt alle anderen berührungssensitiven Anzeige- und Berührungsfelder deaktiviert ist. Somit kann eine gleichzeitige Schaltstufenauswahl und -bestätigung von unterschiedlichen Schaltstufen zuverlässig verhindert werden.

Nach einer bevorzugten Ausführungsform der vorliegenden Erfindung ist die Berührungssensitivität des Berührungsbildschirms derart regelbar, dass die Berührungssensitivität eines Anzeige- und Berührungsfeldes, das einer vorbestimmten Schaltstufe zur Anzeige und Auswahl derselbigen zugeordnet ist und dessen Schaltstufe aktiv ist, bis zu einer Auswahl und Bestätigung einer anderen Schaltstufe oder bis zu einem Betätigen der Fahrzeugzündung deaktiviert ist. Dadurch kann zuverlässig vermieden werden, dass dieselbe Schaltstufe mehrfach hintereinander ausgewählt und bestätigt werden kann.

Gemäß einer bevorzugten Ausführungsform der vorliegenden Erfindung weist der Berührungsbildschirm auf seiner Bildschirmoberfläche wenigstens ein Haptikelement in einem Bereich des Anzeige- und Berührungsfeldes oder des Bestätigungsfeldes oder in einem Bereich zwischen zwei Anzeige- und Berührungsfeldern oder in einem Bereich zwischen dem Anzeige- und Berührungsfeld und dem Bestätigungsfeld auf. Vorzugsweise ist das wenigstens eine Haptikelement randnah in dem jeweiligen Bereich angeordnet. Randnah im Sinne der vorliegenden Erfindung ist ein distaler Bereich, welcher sich von einem Rand des entsprechenden Bereiches bis zu einer Hälfte einer Strecke, welche sich von dem Bereichsrand bis zu einer Mitte des Bereiches erstreckt, reicht. Der sich von der Hälfte bis zu der Bereichsmitte erstreckende proximale Bereich definiert einen Innenbereich. Für das Anzeige- und Berührungsfeld bzw. für das Bestätigungsfeld korrespondiert der Bereich zu der Ausdehnung des entsprechenden berührungssensitiven Feldes. Für einen Zwischenbereich korrespondiert der Bereich zu der Ausdehnung des Zwischenbereiches.

Vorzugsweise kann das Haptikelement in einem Bereich angeordnet sein, der benachbart zu einem Anzeige- und Berührungsfeld, einem Bestätigungsfeld oder einem Zwischenbereich liegt. Damit kann einem Benutzer beispielsweise während eines berührenden Überstreichens des Berührungsbildschirms signalisiert werden, dass ein Anzeige- und Berührungsfeld bzw. ein Bestätigungsfeld bzw. ein dazwischenliegender Zwischenbereich verlassen oder erreicht wird. Das Haptikelement kann beispielsweise als Bildschirmoberflächenerhebung oder Bildschirmoberflächensenke ausgebildet sein.

Ferner können vorzugsweise in einem Bereich wenigstens zwei voneinander beabstandete und zueinander parallel ausgerichtete Haptikelemente vorgesehen sein. Weiter bevorzugt können diese Haptikelemente ein Anzeige- und Berührungsfeld, ein Bestätigungsfeld oder einen Zwischenbereich haptisch begrenzen. Damit kann einem Benutzer das Ausmaß des jeweiligen Feldes bzw. Bereiches haptisch signalisiert werden.

Weiter bevorzugt weisen die Haptikelemente eine in Richtung zu einem vorzugsweise benachbarten Anzeige- und Berührungsfeld oder einem vorzugsweise benachbarten Bestätigungsfeld weisende Erstreckung auf. Damit können die Haptikelemente eine Führung von einem Feld bzw. Bereich zu einem benachbarten Feld bzw. Bereich ausbilden, wodurch ein Benutzer intuitiv erfährt, in welcher Richtung das berührende Überstreichen für die Schaltstufenauswahl und -bestätigung zu erfolgen hat. Die Handhabung der Betätigungseinrichtung kann dadurch vereinfacht werden.

Die Form des Haptikelements ist frei wählbar. Das Haptikelement kann jede denkbare Form annehmen, sofern die Form für die vorgesehene Funktion, beispielsweise als Begrenzung, Führung oder Signal für das Verlassen oder Erreichen eines Feldes bzw. Bereiches geeignet ist.

Ein Haptikelement kann vorzugsweise aus einem Einzelelement oder aus mehreren Einzelelementen bestehen. Beispielsweise kann ein aus einer länglichen Erhebung oder Senke ausgebildetes Haptikelement als ein längliches Haptikelement wahrgenommen werden. Eine solche als längliches Haptikelement wahrgenommene Erhebung oder Senke kann alternativ aus mehreren in einer Reihe angeordneten, beispielsweise punktförmigen bzw. nadelkopfförmigen Erhebungen oder Senken ausgebildet sein.

Nach einem bevorzugten Ausführungsbeispiel der vorliegenden Erfindung bildet die Betätigungseinrichtung ein Griffstück mit einer einem Benutzer der Betätigungseinrichtung zugewandten Griffstückoberfläche aus, auf welcher der berührungssensitive Berührungsbildschirm angeordnet ist, wobei das Griffstück ein außerhalb des Berührungsbildschirms angeordnetes Schaltelement zur Aktivierung oder Deaktivierung einer Parksperrenfunktion des Fahrzeuggetriebes aufweist. Weiter bevorzugt ist das Schaltelement zur Aktivierung und Deaktivierung der Parksperre vorgesehen. Ein solches Schaltelement kann beispielsweise ein übliches Drucktastenelement sein. Das Drucktastenelement ist mit einer Steuereinrichtung, beispielsweise einer Getriebesteuereinrichtung derart gekoppelt, dass bei deaktivierter Parksperre durch Betätigen des Drucktastenelements die Parksperre aktivierbar ist. Alternativ oder zusätzlich kann die Kopplung derart erfolgen, dass bei aktivierter Parksperre durch Betätigen des Drucktastenelements die Parksperre deaktiviert wird.

Vorzugsweise weist die Griffstückoberfläche querschnittlich eine einer Handfläche angepasste ergonomische Form auf. Besonders bevorzugt hat das Griffstück querschnittlich eine Computermaus entsprechende Oberflächenform, wodurch ein Benutzer seine Hand bequem auf dem Griffstück bzw. der Griffstückoberfläche zur Bedienung bzw. Betätigung der Betätigungseinrichtung ablegen kann. Die Breite der Griffstückoberfläche kann bedarfsgerecht derart angepasst sein, dass ein Benutzer seine Hand vorzugsweise wenigstens teilweise, beispielsweise mit dem Handballen und zwei oder mehr Fingern oder besonders bevorzugt vollständig auf der Griffstückoberfläche ablegen kann. Der Berührungsbildschirm ist dabei vorzugsweise derart angeordnet, dass dieser für den Benutzer sichtbar ist und der Benutzer den Berührungsbildschirm mit seinen Fingern, vorzugsweise in einem auf der Griffstückoberfläche abgelegten Zustand, bedienen kann.

Gemäß einer bevorzugten Ausführungsform der vorliegenden Erfindung weist das Griffstück ein bewegliches freies Ende und ein ortsfestes eingefasstes Ende auf, zwischen denen der berührungssensitive Berührungsbildschirm angeordnet ist, wobei das Schaltelement derart ausgebildet und angeordnet ist, dass durch Bewegen des freien Endes die Parksperrenfunktion aktivierbar oder deaktivierbar ist. Ein solches Schaltelement kann beispielsweise eine an dem freien Ende angeordnete induktive oder optische Sensorik sein, welche durch Bewegen des freien Endes ein Signal auslösen kann. Alternativ kann das Schaltelement vorzugsweise ein Mikroschalter sein, der im Bereich des eingefassten Endes derart angeordnet ist, dass durch Bewegen des freien Endes, beispielsweise durch Ziehen oder Drücken, der Mikroschalter in dem Bereich des eingefassten Endes betätigt wird. Das eingefasste Ende definiert für das freie Ende eine Drehachse, um welche das freie Ende bewegbar ist. Das eingefasste Ende kann vorzugsweise drehbeweglich eingefasst sein. Die Einfassung kann beispielsweise über ein die Betätigungseinrichtung tragendes Trägerelement wie beispielsweise ein Gehäuseelement erfolgen. Das Gehäuseelement kann vorzugsweise Teil einer Fahrzeugmittelkonsole sein. Das eingefasste Ende kann alternativ bevorzugt ortsfest eingespannt sein, wobei das Griffstück wenigstens in einem Bereich zwischen dem Berührungsbildschirm und dem eingefassten Ende aus einem flexiblen Material ausgestaltet ist. Der bevorzugte Mikroschalter ist dabei zur Betätigung in dem flexiblen Bereich des Griffstücks angeordnet. Der Mikroschalter bzw. das Schaltelement kann an dem Griffstück oder alternativ in einem Bereich des Griffstücks derart angeordnet sein, dass dieser durch Bewegen des Griffstücks schaltwirksam betätigbar ist.

Weiter bevorzugt ist das Griffstück tableauartig bzw. scheibenförmig ausgebildet, wobei die Griffstückoberfläche besonders bevorzugt eine einer Handfläche angepasste ergonomische Form aufweist. Dadurch ist das Griffstück kostengünstig und für eine Zieh- oder Druckbetätigung handlich und leicht bedienbar ausbildbar.

Nach einer bevorzugten Ausführungsform der vorliegenden Erfindung weist die Betätigungseinrichtung eine Vibrationseinrichtung zur Signalisierung einer ausgewählten Funktion bzw. als Feedback für eine ausgewählte Funktion aus. Die Vibrationseinrichtung kann dazu an jedem Ort der Betätigungseinrichtung angeordnet werden, solange der Ort geeignet ist, einem Benutzer das Vibrationssignal fühlbar vermitteln zu können. Vorzugsweise ist die Vibrationseinrichtung mit der Betätigungseinrichtung oder einer Steuereinrichtung, beispielsweise der Getriebesteuereinrichtung derart gekoppelt, dass ein Vibrationssignal bei Aktivierung oder Deaktivierung der Parksperre oder bei Aktivierung und Deaktivierung der Parksperre von der Vibrationseinrichtung abgebbar ist.

Gemäß einer bevorzugten Ausführungsform der vorliegenden Erfindung ist der Berührungsbildschirm derart regelbar, dass vorbestimmte, beispielsweise berührte bzw. betätigte berührungssensitive Felder wie das Anzeige- und Berührungsfeld und das Bestätigungsfeld eine andere Helligkeit und/oder Farbe als die übrigen, beispielsweise nicht betätigten bzw. berührten Felder aufweisen. Ferner kann vorzugsweise das Bestätigungsfeld eine andere Helligkeit und/oder Farbe als das Anzeige- und Berührungsfeld haben. Weiterhin bevorzugt ist der Berührungsbildschirm derart geregelt, dass die zwischen den Anzeige- und Berührungsfeldern und dem Bestätigungsfeld liegenden Zwischenbereiche eine andere Helligkeit als die berührungssensitiven Felder haben. Besonders bevorzugt sind die Zwischenbereiche dunkler als die Anzeige- und Berührungsfelder und das Bestätigungsfeld geregelt. Mittels Regelung der Helligkeit und Farbe sind zum einen die jeweiligen Felder für einen Benutzer leicht erkennbar und unterscheidbar und können dem Benutzer zum anderen eine bestimmte ausgeführte Funktion wie eine Betätigung oder Berührung eines Feldes oder eine ausgewählte und/oder bestätigte Schaltstufe anzeigen. Dadurch ist eine Handhabung der Betätigungseinrichtung weiter vereinfachbar.

Weitere Merkmale und Vorteile der Erfindung ergeben sich aus der nachfolgenden Beschreibung von bevorzugten Ausführungsbeispielen der Erfindung, anhand der Figuren und Zeichnungen, die erfindungswesentliche Einzelheiten zeigen, und aus den Patentansprüchen. Die einzelnen Merkmale können je einzeln für sich oder zu mehreren in beliebiger Kombination bei einer bevorzugten Ausführungsform der Erfindung verwirklicht sein.

Bevorzugte Ausführungsbeispiele der Erfindung werden nachfolgend anhand der beigefügten Zeichnungen näher erläutert. Es zeigen:
- Fig. 1: eine schematische Draufsicht einer Betätigungseinrichtung nach einem Ausführungsbeispiel,
- Fig. 2: eine schematische Draufsicht einer Betätigungseinrichtung nach einem weiteren Ausführungsbeispiel,
- Fig. 3: eine schematische Seitenansicht einer Betätigungseinrichtung nach einem weiteren Ausführungsbeispiel, und
- Fig. 4: ein Ablaufdiagramm eines Verfahrens zur Auswahl von Schaltstufen eines Fahrzeuggetriebes.

In der nachfolgenden Beschreibung bevorzugter Ausführungsbeispiele der vorliegenden Erfindung werden für die in den verschiedenen Figuren dargestellten und gleich oder ähnlich wirkenden Elemente gleiche oder ähnliche Bezugszeichen verwendet, wobei auf eine detaillierte wiederholte Beschreibung dieser Elemente verzichtet wird.

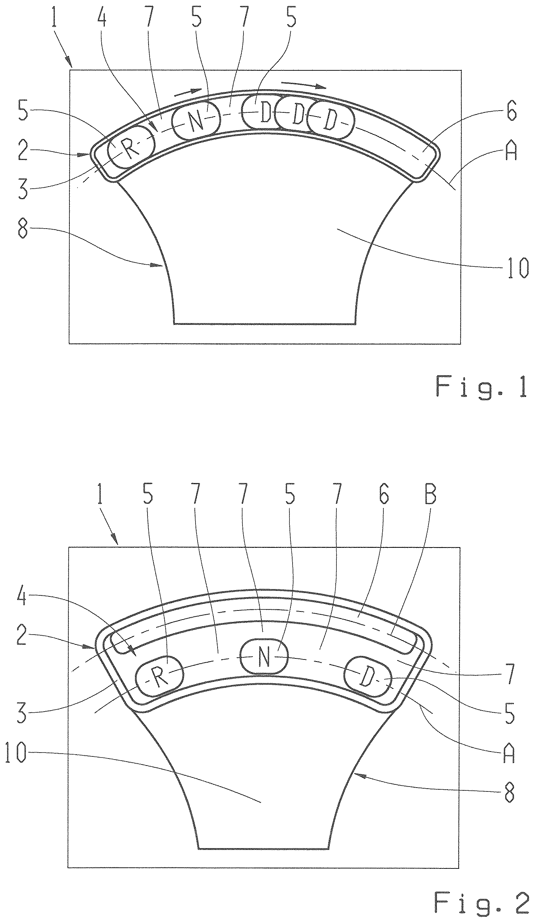

Figur 1 zeigt eine schematische Draufsicht einer Betätigungseinrichtung 1 nach einem Ausführungsbeispiel. Die Betätigungseinrichtung 1 umfasst einen Berührungsbildschirm 2, der von einem aus kunststoffhaltigem Material ausgeformten Trägerelement 8 gehalten ist.

Der Berührungsbildschirm 2 ist auf dem Trägerelement 8 aufgesetzt. Das Trägerelement 8 weist dazu eine Ausnehmung zur Aufnahme des Berührungsbildschirms 2 auf. Alternativ kann der Berührungsbildschirm 2 seitlich an dem Trägerelement 8 fixiert sein. Der Berührungsbildschirm 2 ist mit dem Trägerelement 8 mittels einer Rast-, Schraub-, Klemm- oder Klebverbindung verbunden. Alternativ oder zusätzlich kann der Berührungsbildschirm 2 über eine Presspassung in der Ausnehmung gehalten werden, wobei ein eine berührungssensitive Bildschirmoberfläche 4 einfassender Rahmen 3 vorzusehen ist, der dem Druck einer Presspassung vollständig derart aufnehmen kann, dass der Druck keinen schädigenden Einfluss auf eine Bildschirmoberfläche 4 des Berührungsbildschirms 2 ausüben kann. Das Trägerelement 8 weist angrenzend zu dem Berührungsbildschirm eine Auflage 10 zur Ablage einer Hand eines Benutzers auf. Die Auflage 10 weist eine zur vollständigen Ablage der Benutzerhand geeignete Größe auf.

Der Berührungsbildschirm 2 weist einen Rahmen 3 auf, der eine betätigbare berührungssensitive Bildschirmoberfläche 4 einfasst. Die Bildschirmoberfläche 4 ist in drei berührungssensitive Anzeige- und Berührungsfelder 5, einem berührungssensitiven Bestätigungsfeld 6 und dazwischenliegende berührungssensitive Zwischenbereiche 7 unterteilt. Die Anzeige- und Berührungsfelder 5 und das Bestätigungsfeld 6 sind nebeneinander mit den dazwischenliegenden Zwischenbereichen 7 entlang einer in Figur 1 gezeigten gekrümmten Linie A aufgereiht. Das Bestätigungsfeld 6 ist dabei außenliegend angeordnet. Der Berührungsbildschirm 2 ist dadurch in Längserstreckungsrichtung der Betätigungseinrichtung 1 schmal ausbildbar.

Die Anzeige- und Berührungsfelder 5 zeigen jeweils ein schwarzes Buchstabensymbol R, N, D für eine auswählbare Schaltstufe an, wobei R für Rückwärtsfahrbetrieb, N für Neutralstellung und D für Vorwärtsfahrbetrieb eines Fahrzeuggetriebes steht. Das Bestätigungsfeld 6 zeigt den Schriftzug "Drive" in roten Buchstaben für die ausgewählte und bestätigte Schaltstufe D für Vorwärtsfahrbetrieb an. Die Anzeige- und Berührungsfelder 5 sowie das Bestätigungsfeld 6 heben sich in ihrer Helligkeit von den Zwischenbereichen 7 ab, wodurch die Felder für einen Benutzer gut sichtbar sind. Dies kann durch eine unterschiedliche Ausleuchtung der entsprechenden Felder realisiert werden. Dabei kann der Berührungsbildschirm 2 derart geregelt werden, dass ein berührtes Feld heller leuchtet oder durch Abdunkelung der anderen Felder heller erscheint als die übrigen Felder. Dadurch kann dem Benutzer die Betätigung bzw. Berührung des entsprechenden Feldes signalisiert werden.

Figur 2 zeigt eine schematische Draufsicht einer Betätigungseinrichtung 1 nach einem weiteren Ausführungsbeispiel. Im Unterschied zu dem in Figur 1 gezeigten Ausführungsbeispiel ist das Bestätigungsfeld 6 benachbart zu allen Anzeige- und Berührungsfeldern 5 angeordnet. Im Einzelnen ist das Bestätigungsfeld 6 neben der entlang der gekrümmten ersten Linie A angeordneten Anzeige- und Berührungsfelder 5 angeordnet und erstreckt sich entlang einer in der Figur 2 gezeigten gekrümmten zweiten Linie B parallel zu der entlang der ersten Linie A verlaufenden Anordnungsrichtung der Anzeige- und Berührungsfelder 5 von einer Seite des Berührungsbildschirms 2 bis zu der gegenüberliegenden Seite des Berührungsbildschirms 2. Das Bestätigungsfeld 6 zeigt einen roten Schriftzug "Neutral" an, welcher für die ausgewählte und bestätigte Schaltstufe N für Neutralstellung steht. Das in der Figur 2 gezeigte mittlere Anzeige- und Berührungsfeld 5 zeigt den Buchstaben "N" in Rot an. Damit wird einem Benutzer signalisiert, dass die Schaltstufe N aktiv bzw. ausgewählt und bestätigt ist. Vorzugsweise ist das Anzeige- und Berührungsfeld 5, das die aktive Schaltstufe anzeigt, deaktiviert, um eine Mehrfachauswahl derselben Schaltstufe nacheinander zu verhindern.

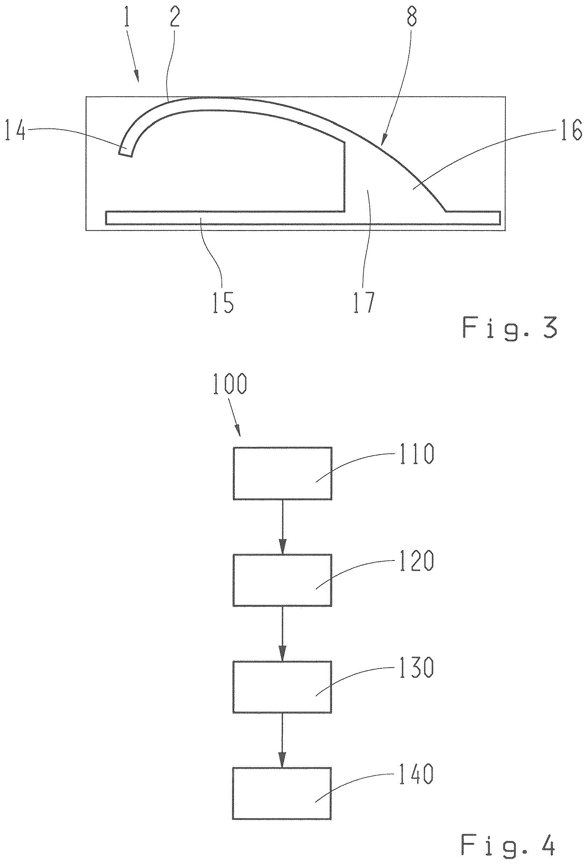

Figur 3 zeigt eine schematische Seitenansicht einer Betätigungseinrichtung 1 nach einem bevorzugten Ausführungsbeispiel, wobei die Betätigungseinrichtung 1 eine der in den Figuren 1 und 2 entsprechende Betätigungseinrichtung 1 sein kann.

Das Trägerelement 8 weist querschnittlich eine computermausartige Oberflächenform auf und ist tableauartig bzw. scheibenförmig ausgestaltet. Die Form des Trägerelements 8 entspricht einer an eine menschliche Hand angepassten ergonomischen Form. Das Trägerelement 8 weist ein freies Ende 14 auf, welches beabstandet zu einer die Betätigungseinrichtung 1 tragenden und haltenden Halterung 15 ist. Auf der dem freien Ende 14 abgewandten Seite des Trägerelements 8 weist das Trägerelement 8 ein eingefasstes Ende 16 auf, welches mit der Halterung 15 verbunden ist. Die Halterung 15 kann beispielsweise ein Gehäuseelement oder Bauteil einer Fahrzeugmittelkonsole sein. Das eingefasste Ende 16 umfasst eine mit der Halterung 15 verbundene Verdickung 17, in welchem ein Mikroschalter zur Aktivierung oder Deaktivierung einer Parksperre des Fahrzeuggetriebes aufgenommen ist. Das Trägerelement 8 ist dazu mit seinem von dem freien Ende 14 bis zu dem eingefassten Ende 16 reichenden Bereich relativ zu der Halterung 15 beweglich, wobei der nicht dargestellte Mikroschalter durch Drücken oder Ziehen des Trägerelements 8 schaltwirksam betätigt werden kann. Dazu kann das Trägerelement 8 beispielsweise im Bereich des eingefassten Endes 16 über eine Drehachse mit der Halterung 15 drehbeweglich verbunden sein. Alternativ kann die Beweglichkeit des Trägerelements 8 über ein Ausbildes des Trägerelements 8 aus einem flexiblen Material erreicht werden, wobei das eingefasste Ende 16 in der Halterung ortsfest einzuspannen ist.

Vorzugsweise ist eine Betätigungsrichtung des freien Endes 14 einer Aktivierung der Parksperre und eine dazu entgegengesetzte Betätigungsrichtung des freien Endes 14 einer Deaktivierung der Parksperre zugeordnet.

Das Trägerelement 8 bildet ein Griffstück für einen Benutzer, wobei das Trägerelement 8 entweder über ein Umgreifen des freien Endes 14 oder über ein Umgreifen wenigstens einer zu dem freien Ende 14 führenden Seite des Trägerelements 8 betätigbar, insbesondere ziehbar ist. Alternativ oder zusätzlich kann in einem Bereich zwischen dem freien Ende 14 und dem eingefassten Ende 16 eine Aussparung für ein Hindurchgreifen zum Betätigen, insbesondere Ziehen des Trägerelements 8 und damit zum Aktivieren oder Deaktivieren der Parksperrenfunktion vorgesehen sein.

Der Berührungsbildschirm 2 ist zwischen dem freien Ende 14 und dem eingefassten Ende 16 an einem von einem Benutzer von oberhalb der Betätigungseinrichtung 1 einsehbaren Ort angeordnet.

Figur 4 zeigt ein Ablaufdiagramm eines Verfahrens 100 zur Auswahl von Schaltstufen eines Fahrzeuggetriebes mit shift-by-wire Betätigung beispielsweise mittels einer wie vorbeschriebenen Betätigungseinrichtung 1.

Das Verfahren 100 umfasst einen Schritt 110 des Berührens des berührungssensitiven Anzeige- und Berührungsfelds 5. Dadurch wird eine Auswahl der mit dem Anzeige- und Berührungsfeld 5 angezeigten Schaltstufe gestartet. Vorzugsweise können mit der Berührung des Anzeige- und Berührungsfeldes 5 die übrigen Anzeige- und Berührungsfelder deaktiviert werden.

In einem nachfolgenden Schritt 120 erfolgt ein berührendes Überstreichen des Berührungsbildschirms 2 von dem Anzeige- und Berührungsfeld 5 bis zu dem Bestätigungsfeld 6. Das entsprechende Symbol für die ausgewählte Schaltstufe kann dabei für einen Benutzer optisch mitgeführt bzw. auf dem Berührungsbildschirm 2 am Berührungsort anzeigbar mitbewegt werden. Bei der mit Figur 1 gezeigten Betätigungseinrichtung 1 erfolgt das berührende Überstreichen in seitliche Richtung, wobei andere Anzeige- und Berührungsfelder 5 überstrichen werden können, wenn beispielsweise die Schaltstufe R oder N ausgewählt ist. Für dieses bevorzugte Ausführungsbeispiel wird eine vorbeschriebene Deaktivierung wenigstes eines noch zu überstreichenden oder aller Anzeige- und Berührungsfelder 5 besonders bevorzugt. Bei dem mit Figur 2 dargestellten Ausführungsbeispiel erfolgt das berührende Überstreichen von dem jeweiligen Anzeige- und Berührungsfeld 5 jeweils senkrecht bzw. quer zu der Anordnungsrichtung der Anzeige- und Berührungsfelder 5. Dadurch braucht keines der anderen Anzeige- und Berührungsfelder 5 überstrichen werden. Eine wie vorbeschriebene Deaktivierung der Anzeige- und Berührungsfelder 5 ist für dieses Ausführungsbeispiel nicht zwingend erforderlich. Ferner ist der Weg von dem Anzeige- und Berührungsfeld 5 zu dem Bestätigungsfeld 6 kürzer, wodurch eine zügigere Auswahl und Bestätigung einer Schaltstufe erfolgen kann.

Danach folgt ein Schritt 130 des Übermittelns von der Betätigungseinrichtung 1 eines die ausgewählte und bestätigte Schaltstufe enthaltenden Signals an eine Getriebesteuereinrichtung. Das Signal kann beispielsweise dadurch ausgelöst werden, dass das Bestätigungsfeld 6 berührend erreicht wird oder erst, wenn das Bestätigungsfeld 6 nach berührenden Erreichen einen berührungslosen Zustand einnimmt, beispielsweise nach Abnehmen des Fingers von dem Bestätigungsfeld 6. Gleichzeitig kann das die ausgewählte und bestätigte Schaltstufe darstellende Symbol von dem Bestätigungsfeld 6 zu seinem Ursprungsort, dem Anzeige- und Berührungsfeld 5 zurückgleiten. Dadurch kann dem Benutzer die Bestätigung der ausgewählten Schaltstufe signalisiert werden. Die Bestätigung der ausgewählten Schaltstufe kann ferner durch Anzeige der Schaltstufe in dem Bestätigungsfeld 6 durch ein entsprechend zugeordnetes Symbol oder einen Schriftzug sowie zusätzlich über eine farbliche Abhebung des in dem zugehörigen Anzeige- und Berührungsfeld 5 und dem Bestätigungsfeld 6 angezeigten Symbols bzw. Schriftzuges erfolgen.

In einem nachfolgenden Schritt 140 wird von der Getriebesteuerung das Einlegen der ausgewählten und bestätigten Schaltstufe auf Basis des übermittelten Signals veranlasst. Das Einlegen der ausgewählten und bestätigten Schaltstufe kann einem Benutzer durch eine wie vorbeschriebene farbliche Hervorhebung angezeigt werden, wobei die farbliche Hervorhebung beispielsweise wenigstens des in dem Anzeige- und Berührungsfeld 5 angezeigten Symbols zur Bestätigung der ausgewählten Schaltstufe entfällt. Alternativ oder zusätzlich kann ein kurz- oder längerfristiges Blinken des die Schaltstufe zugeordneten Symbols das Einlegen der ausgewählten und bestätigten Schaltstufe anzeigen.

Eine weitere Auswahl und Bestätigung einer anderen Schaltstufe und somit ein Schaltstufenwechsel kann auf die vorbeschriebene Art und Weise erfolgen.

Die beschriebenen und in den Figuren gezeigten Ausführungsbeispiele sind nur beispielhaft gewählt. Unterschiedliche Ausführungsbeispiele können vollständig und in Bezug auf einzelne Merkmale miteinander kombiniert werden. Auch kann ein Ausführungsbeispiel durch ein oder mehrere Merkmale eines weiteren Ausführungsbeispiels ergänzt werden.

### Bezugszeichen

- 1: Betätigungseinrichtung
- 2: Berührungsbildschirm
- 3: Rahmen
- 4: Bildschirmoberfläche
- 5: Anzeige- und Berührungsfeld
- 6: Bestätigungsfeld
- 7: Zwischenbereich
- 8: Trägerelement
- 10: Auflage
- 14: freies Ende
- 15: Halterung
- 16: eingefasstes Ende
- 17: Verdickung
- 100: Verfahren
- 110: erster Verfahrensschritt
- 120: zweiter Verfahrensschritt
- 130: dritter Verfahrensschritt
- 140: vierter Verfahrensschritt
- A: erste Linie
- B: zweite Linie

## Patentansprüche

1. Betätigungseinrichtung (1) zur Auswahl von Schaltstufen eines Fahrzeuggetriebes mit shift-by-wire Betätigung, wobei die Betätigungseinrichtung (1) einen Berührungsbildschirm (2) mit wenigstens einem berührungssensitiven Anzeige- und Berührungsfeld (5) zur Anzeige und Auswahl einer auswählbaren Schaltstufe aufweist, **dadurch gekennzeichnet, dass** der Berührungsbildschirm (2) ein zu dem wenigstens einen berührungssensitiven Anzeige- und Berührungsfeld (5) benachbartes berührungssensitives Bestätigungsfeld (6) zum Bestätigen und zur Anzeige der ausgewählten Schaltstufe aufweist, wobei das berührungssensitive Bestätigungsfeld (6) mit dem Anzeige- und Berührungsfeld (5) derart gekoppelt ist, dass durch berührendes Überstreichen des Berührungsbildschirms (2) von dem Anzeige- und Berührungsfeld (5) bis zu dem Bestätigungsfeld (6) eine angezeigte auswählbare Schaltstufe zur schaltwirksamen Stellung des Gangwechselgetriebes auswählbar und bestätigbar ist.

2. Betätigungseinrichtung (1) nach Anspruch 1, **dadurch gekennzeichnet, dass** unterschiedliche Schaltstufen mit dem berührungssensitiven Bestätigungsfeld (6) bestätigbar und anzeigbar ist.

3. Betätigungseinrichtung (1) nach Anspruch 2, **dadurch gekennzeichnet, dass** der Berührungsbildschirm (2) mehrere berührungssensitive Anzeige- und Berührungsfelder (5), über welche jeweils wenigstens eine Schaltstufe anzeigbar und auswählbar ist, und ein den Anzeige- und Berührungsfeldern (5) zugeordnetes gemeinsames berührungssensitives Bestätigungsfeld (6) aufweist, wobei die Anzeige- und Berührungsfelder (5) und das gemeinsame Bestätigungsfeld (6) entlang einer Reihe angeordnet sind, und wobei die Betätigungseinrichtung (1) den Berührungsbildschirm (2) derart steuert, dass bei Berührung eines der Anzeige- und Berührungsfelder (5) die Berührungssensitivität der anderen Anzeige- und Berührungsfelder (5) deaktiviert ist.

4. Betätigungseinrichtung (1) nach Anspruch 2, **dadurch gekennzeichnet, dass** der Berührungsbildschirm (2) mehrere berührungssensitive Anzeige- und Berührungsfelder (5), über welche jeweils wenigstens eine Schaltstufe anzeigbar und auswählbar ist, und ein den Anzeige- und Berührungsfeldern (5) zugeordnetes gemeinsames berührungssensitives Bestätigungsfeld (6) aufweist, wobei die Anzeige- und Berührungsfelder (5) entlang einer Reihe (A) angeordnet sind, und wobei das Bestätigungsfeld (6) zu der Reihe (A) benachbart angeordnet ist.

5. Betätigungseinrichtung (1) nach Anspruch 4, **dadurch gekennzeichnet, dass** die Berührungssensitivität des Berührungsbildschirms (2) derart regelbar ist, dass bei Berührung eines Anzeige- und Berührungsfelds (5) die Berührungssensitivität der anderen Anzeige- und Berührungsfelder (5) deaktiviert ist.

6. Betätigungseinrichtung (1) nach einem der vorherigen Ansprüche, **dadurch gekennzeichnet, dass** der Berührungsbildschirm (2) auf seiner Bildschirmoberfläche wenigstens ein Haptikelement in einem Bereich des Anzeige- und Berührungsfeldes (5) oder des Bestätigungsfeldes (6) oder in einem Bereich zwischen zwei Anzeige- und Berührungsfeldern (5) oder in einem Bereich zwischen dem Anzeige- und Berührungsfeld (5) und dem Bestätigungsfeld (6) aufweist.

7. Betätigungseinrichtung (1) nach Anspruch 6, **dadurch gekennzeichnet, dass** der Berührungsbildschirm (2) auf seiner Bildschirmoberfläche wenigstens zwei voneinander beabstandete und zueinander parallel ausgerichtete Haptikelemente umfasst, die eine in Richtung zu einem Anzeige- und Berührungsfeld (5) oder einem Bestätigungsfeld (6) weisende Erstreckung aufweisen.

8. Betätigungseinrichtung (1) nach einem der Ansprüche 1 bis 6, **dadurch gekennzeichnet, dass** die Betätigungseinrichtung (1) ein Griffstück (10) mit einer einem Benutzer der Betätigungseinrichtung (1) zugewandten Griffstückoberfläche (12) ausbildet, auf welcher der berührungssensitive Berührungsbildschirm (2) angeordnet ist, wobei das Griffstück (10) einen außerhalb des Berührungsbildschirms (2) angeordneten Schalter zur Aktivierung oder Deaktivierung einer Parksperrenfunktion des Fahrzeuggetriebes aufweist.

9. Betätigungseinrichtung (1) nach Anspruch 8, **dadurch gekennzeichnet, dass** das Griffstück (10) ein bewegliches freies Ende (14) und ein ortsfestes eingefasstes Ende (16) aufweist, zwischen denen der berührungssensitive Berührungsbildschirm (2) angeordnet ist, wobei an dem eingefassten Ende (16) ein derartiger Schalter vorgesehen ist, dass durch Bewegen des freien Endes (14) die Parksperrenfunktion aktivierbar oder deaktivierbar ist.

10. Verfahren (100) zur Auswahl von Schaltstufen eines Fahrzeuggetriebes mit shift-by-wire Betätigung mittels einer Betätigungseinrichtung (1) nach einem der vorherigen Ansprüche, wobei das Verfahren (100) umfasst einen Schritt (110) des Berührens des berührungssensitiven Anzeige- und Berührungsfelds (5), **gekennzeichnet durch** einen nachfolgenden Schritt (120) des berührenden Überstreichens des Berührungsbildschirms (2) von dem Anzeige- und Berührungsfeld (5) bis zu dem Bestätigungsfeld (6), einen nachfolgenden Schritt (130) des Übermittelns von der Betätigungseinrichtung (1) eines die ausgewählte Schaltstufe enthaltenden Signals an eine Getriebesteuereinrichtung und einen nachfolgenden Schritt (140) des Veranlassens des Einlegens der ausgewählten Schaltstufe in dem Gangwechselgetriebe durch die Getriebesteuerung auf Basis des übermittelten Signals.

## Claims

1. Actuating device (1) for selecting shift stages of a vehicle gearbox by means of shift-by-wire actuation, wherein the actuation device (1) has a touch screen (2) with at least one touch-sensitive display and touch field (5) for displaying and selecting a selectable shift stage, **characterized in that** the touch screen (2) has a touch-sensitive confirmation field (6) which is adjacent to the at least one touch-sensitive display and touch field (5) and has the purpose of confirming and of displaying the selected shift stage, wherein the touch-sensitive confirmation field (6) is coupled to the display and touch field (5) in such a way that brushing contact with the touch screen (2) from the display and touch field (5) as far as the confirmation field (6) causes a displayed selectable shift stage to be selected and confirmed for the effective shifting adjustment of the change speed gearbox.

2. Actuating device (1) according to Claim 1, **characterized in that** different shift stages can be confirmed and displayed with the touch-sensitive confirmation field (6).

3. Actuating device (1) according to Claim 2, **characterized in that** the touch screen (2) has a plurality of touch-sensitive display and touch fields (5), by means of which in each case at least one shift stage can be displayed and selected, and a common touch-sensitive confirmation field (6) which is assigned to the display and touch fields (5), wherein the display and touch fields (5) and the common confirmation field (6) are arranged in a row, and wherein the actuating device (1) controls the touch screen (2) in such a way that when one of the display and touch fields (5) is touched, the touch sensitivity of the other display and touch fields (5) is deactivated.

4. Actuating device (1) according to Claim 2, **characterized in that** the touch screen (2) has a plurality of touch-sensitive display and touch fields (5) by means of which in each case at least one shift stage can be displayed and selected, and a common touch-sensitive confirmation field (6) which is assigned to the display and contact fields (5), wherein the display and contact fields (5) are arranged in a row (A) and wherein the confirmation field (6) is arranged adjacent to the row (A).

5. Actuating device (1) according to Claim 4, **characterized in that** the touch sensitivity of the touch screen (2) can be adjusted in such a way that when one display and touch field (5) is touched, the touch sensitivity of the other display and touch fields (5) is deactivated.

6. Actuating device (1) according to one of the preceding claims, **characterized in that** the touch screen (2) has, on its screen surface, at least one haptic element in a region of the display and touch field (5) or of the confirmation field (6) or in a region between two display and touch fields (5) or in a region between the display and touch field (5) and the confirmation field (6).

7. Actuating device (1) according to Claim 6, **characterized in that** the touch screen (2) comprises, on its screen surface, at least two haptic elements which are spaced apart from one another and are oriented parallel to one another, said haptic elements having an extent which points in the direction of a display and touch field (5) or a confirmation field (6).

8. Actuating device (1) according to one of Claims 1 to 6, **characterized in that** the actuating device (1) forms a grip element (10) with a grip element surface (12) which faces a user of the actuating device (1) and on which the touch-sensitive touch screen (2) is arranged, wherein the grip element (10) has a switch which is arranged outside the touch screen (2) and has the purpose of activating or deactivating a parking lock function of the vehicle gearbox.

9. Actuating device (1) according to Claim 8, **characterized in that** the grip element (10) has a movable free end (14) and a fixed framed end (16) between which ends (14, 16) the touch-sensitive touch screen (2) is arranged, wherein a switch which is provided at the framed end (16) is such that the parking lock function can be activated or deactivated by moving the free end (14) .

10. Method (100) for selecting shift stages of a vehicle gearbox with shift-by-wire actuation by means of an actuating device (1) according to one of the preceding claims, wherein the method (100) comprises a step (110) of touching the touch-sensitive display and touch field (5), **characterized by** a subsequent step (120) of brushing contact with the touch screen (2) from the display and touch field (5) as far as the confirmation field (6), a subsequent step (130) of transferring a signal containing the selected shift stage from the actuating device (1) to a gearbox control device, and a subsequent step (140) of bringing about the engagement of the selected shift stage in the change speed gearbox by means of the gearbox controller on the basis of the transferred signal.

## Revendications

1. Dispositif d'actionnement (1) destiné à sélectionner des rapports d'une transmission d'un véhicule équipé d'un actionnement à commande électrique (shift by wire), le dispositif d'actionnement (1) comprenant un écran tactile (2) avec au moins un champ d'affichage tactile sensible au toucher (5) destiné à afficher et à sélectionner un rapport sélectionnable, **caractérisé en ce que** l'écran tactile (2) comprend un champ d'actionnement sensible au toucher (6) voisin dudit au moins un champ d'affichage tactile sensible au toucher (5) destiné à actionner et à afficher le rapport sélectionné, le champ d'actionnement sensible au toucher (6) étant couplé avec le champ d'affichage tactile (5) de telle sorte que par un toucher continu de l'écran tactile (2) depuis le champ d'affichage tactile (5) jusqu'au champ d'actionnement (6), un rapport sélectionnable affiché puisse être sélectionné et actionné pour positionner la boîte de vitesses en vue d'un changement de rapport.

2. Dispositif d'actionnement (1) selon la revendication 1, **caractérisé en ce que** différents rapports peuvent être actionnés et affichés avec le champ d'actionnement sensible au toucher (6).

3. Dispositif d'actionnement (1) selon la revendication 2, **caractérisé en ce que** l'écran tactile (2) comprend plusieurs champs d'affichage tactiles sensibles au toucher (5), par l'intermédiaire desquels respectivement au moins un rapport peut être affiché et sélectionné, et un champ d'actionnement sensible au toucher commun (6) associé aux champs d'affichage tactiles (5), les champs d'affichage tactiles (5) et le champ d'actionnement commun (6) étant agencés le long d'une série, et le dispositif d'actionnement (1) commandant l'écran tactile (2) de telle sorte que, lors du toucher d'un des champs d'affichage tactiles (5), la sensibilité au toucher des autres champs d'affichage tactiles (5) soit désactivée.

4. Dispositif d'actionnement (1) selon la revendication 2, **caractérisé en ce que** l'écran tactile (2) comprend plusieurs champs d'affichage tactiles sensibles au toucher (5), par l'intermédiaire desquels respectivement au moins un rapport peut être affiché et sélectionné, et un champ d'actionnement sensible au toucher commun (6) associé aux champs d'affichage tactiles (5), les champs d'affichage tactiles (5) étant agencés le long d'une série (A) et le champ d'actionnement (6) étant agencé en position voisine de la série (A).

5. Dispositif d'actionnement (1) selon la revendication 4, **caractérisé en ce que** la sensibilité au toucher de l'écran tactile (2) est ajustable de telle sorte que lors du toucher d'un champ d'affichage tactile (5), la sensibilité au toucher des autres champs d'affichage tactiles (5) soit désactivée.

6. Dispositif d'actionnement (1) selon l'une quelconque des revendications précédentes, **caractérisé en ce que** l'écran tactile (2) comprend sur sa surface d'écran au moins un élément haptique dans une zone du champ d'affichage tactile (5) ou du champ d'actionnement (6) ou dans une zone entre deux champs d'affichage tactiles (5) ou dans une zone entre le champ d'affichage tactile (5) et le champ d'actionnement (6) .

7. Dispositif d'actionnement (1) selon la revendication 6, **caractérisé en ce que** l'écran tactile (2) comprend sur sa surface d'écran au moins deux éléments haptiques espacés les uns des autres et orientés en parallèle les uns des autres, qui présentent une étendue dirigée dans la direction d'un champ d'affichage tactile (5) ou d'un champ d'actionnement (6) .

8. Dispositif d'actionnement (1) selon l'une quelconque des revendications 1 à 6, **caractérisé en ce que** le dispositif d'actionnement (1) comprend une poignée (10) formée avec une surface de poignée (12) tournée vers un utilisateur du dispositif d'actionnement (1), sur laquelle l'écran tactile sensible au toucher (2) est agencé, la poignée (10) comprenant un commutateur agencé à l'extérieur de l'écran tactile (2) pour l'activation ou la désactivation d'une fonction de verrouillage de stationnement de la transmission de véhicule.

9. Dispositif d'actionnement (1) selon la revendication 8, **caractérisé en ce que** la poignée (10) comprend une extrémité libre mobile (14) et une extrémité montée fixe (16), entre lesquelles l'écran tactile sensible au toucher (2) est agencé, un commutateur tel que la fonction de verrouillage de stationnement puisse être activée ou désactivée par déplacement de l'extrémité libre (14) étant prévu au niveau de l'extrémité montée (16).

10. Procédé (100) pour sélectionner des rapports d'une transmission d'un véhicule équipé d'un actionnement à commande électrique (shift by wire) au moyen d'un dispositif d'actionnement (1) selon l'une quelconque des revendications précédentes, le procédé (100) comprenant une étape (110) de toucher du champ d'affichage tactile sensible au toucher (5), **caractérisé par** une étape ultérieure (120) de toucher continu de l'écran tactile (2) depuis le champ d'affichage tactile (5) jusqu'au champ d'actionnement (6), une étape ultérieure (130) de transmission par le dispositif d'actionnement (1) d'un signal contenant le rapport sélectionné vers un dispositif de commande de transmission et une étape ultérieure (140) de demande de mise en place du rapport sélectionné dans la boîte de vitesses par la commande de transmission sur la base du signal transmis.
